# EUROPEAN PATENT APPLICATION

(11) **EP 1 405 717 A1**
(43) Date of publication of application: **07.04.2004**
(21) Application number: 03022280.6
(22) Date of filing: 01.10.2003
(51) Int. Cl.: B29D 29/08, F16G 1/28

(54) **Toothed belt**

(30) Priority: 04.10.2002 IT TO20020860
(71) Applicant: DAYCO EUROPE S.r.l., 64010 Colonnella (Teramo) (IT)
(72) Inventor: Di Meco, Marco, 65129 Pescara (IT); Cipollone, Franco, 66013 Chieti (IT); Baldovino, Carlo, 65016 Montesilvano (IT); Delli Rocioli, Massimiliano, 65016 Montesilvano (IT)
(74) Representative: Franzolin, Luigi

(57) **Abstract**

There is described a vehicle timing control system having a tensioning device for tightening a toothed belt having two annular retaining flanges. The toothed belt (11) has a body (12) made of elastomeric material having two faces (14), two respective sides (16), and toothing defined by a number of teeth (15) extending integrally from one of the faces (14) of the body. The sides (16) of the toothed belt (11) are treated with a lubricant (18), preferably comprising a fluorinated polymer; and the toothed belt (11) treated in accordance with the present invention has a low noise level produced by the tensioning device.

## Description

The present invention relates to a toothed belt, and to a method of treating a toothed belt.

A toothed belt is known comprising a body of elastomeric material, in which a number of resistant threadlike longitudinal inserts are embedded; two faces, from one of which extends integrally toothing defined by a number of teeth extending crosswise to the belt; and two sides extending perpendicularly to the faces.

Belts of the type briefly described above are used in power transmission systems requiring timing between a driving member and a driven member, a typical example of which is the timing control of vehicle engines, to which reference is made in the following description purely by way of example.

Timing control systems normally comprise a drive pulley fixed rigidly to the drive shaft; at least one driven pulley fixed rigidly to the camshaft; and a fixed or automatic tensioning device for tightening the toothed belt.

To ensure correct axial positioning of the belt with respect to the pulleys and tensioning device, one of the pulleys or the tensioning device has two annular retaining flanges extending from the axial ends of the pulley or tensioning device to define a U-shaped seat for the belt.

In actual use, the toothed belt normally meshes with the pulleys, and the back of the toothed belt cooperates with the outer surface of the tensioning device.

When the annular retaining flanges of the tensioning device come into contact with the edge formed by the back and sides of the belt, an immediate change in the adhesion conditions of the tensioning device occurs, and which results in a high noise level.

It is an object of the present invention to provide a toothed belt designed to eliminate the aforementioned drawbacks, and which, in particular, has a low overall noise level, and in particular a low noise level produced by the tensioning device.

According to the present invention, there is provided a toothed belt comprising a body made of elastomeric material and having two faces, two sides, and toothing defined by a number of teeth extending integrally from one of said faces of the body; characterized in that said sides of said toothed belt are treated with friction variation means.

According to the present invention, there is also provided a method of preparing a toothed belt, said toothed belt comprising a body made of elastomeric material and having two faces, two sides, and toothing defined by a number of teeth extending integrally from one of said faces of the body; characterized by comprising the step of treating only said sides with friction variation means.

According to the present invention, there is also provided a vehicle timing control system comprising a tensioning device having at least one annular retaining flange; and a toothed belt in turn comprising a body made of elastomeric material and having two faces, two sides, and toothing defined by a number of teeth extending integrally from one of said faces of the body; characterized in that said sides of said toothed belt are treated with friction variation means.

For a better understanding the invention will be further described with reference to the accompanying drawings, in which:
Figure 1 shows a timing control system employing a toothed belt in accordance with the present invention;
Figure 2 shows a partial view in perspective of a toothed belt in accordance with the present invention.

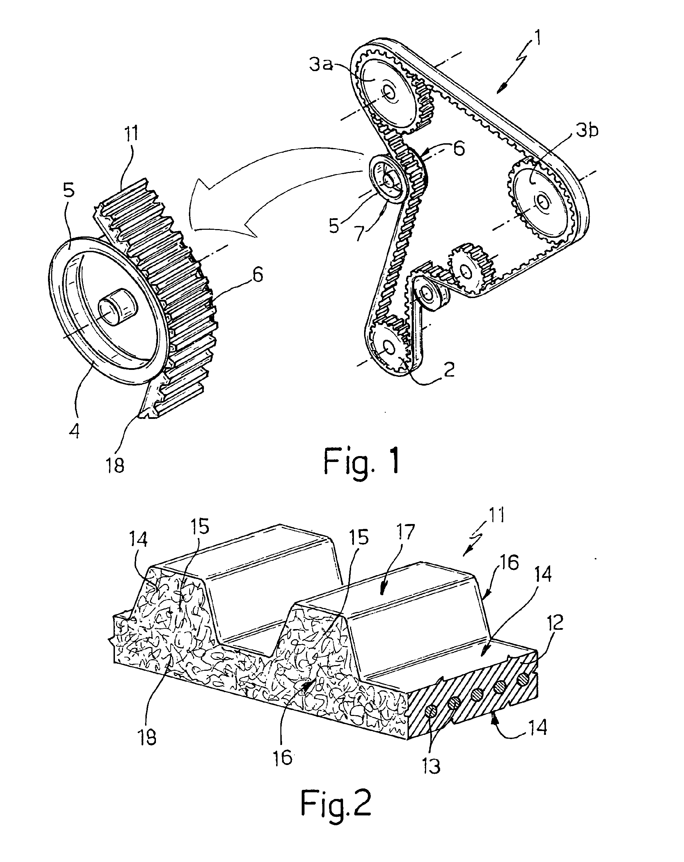

Number 1 in Figure 1 indicates as a whole a vehicle timing control system comprising a drive pulley 2 fixed rigidly to the drive shaft; a first and a second driven pulley 3a, 3b; and a tensioning device 4 for tightening a toothed belt.

Tensioning device 4 has two annular retaining flanges 5, 6 extending from the axial ends of the tensioning device to define a U-shaped seat for a toothed belt 11.

More specifically, as shown in Figure 2, toothed belt 11 comprises a body 12 made of elastomeric material, e.g. HNBR, and in which a number of resistant threadlike longitudinal inserts 13 are embedded.

Toothed belt 11 has two faces 14, one of which provides for transmitting motion, and which are connected by two sides 16 substantially perpendicular to faces 14 and performing no motion transmission function.

Toothing defined by a number of teeth 15 and having a cloth covering 17 extends integrally from one of faces 14.

According to the present invention, sides 16 of toothed belt 11 are treated with a lubricant 18 commonly referred to as "grease", which is semisolid, of high viscosity, e.g. NLGI number 2, and also known as "soft grease".

This type of lubricant 18, in fact, allows it to be deposited solely on sides 16, and not on any part of the faces, thus preventing any reaction between the components of lubricant 18 and those of cloth 17. If, treatment, in fact, were also to extend to part of the faces, this could increase the timing error between drive pulley 2 and first and second driven pulley 3a, 3b, thus increasing mutual dynamic stress.

More specifically, lubricant 18 comprises halogenated polyethers, preferably fluorinated polyethers, which provide for better lubrication, and even more preferably perfluoropolyethers (PFPE). Alternatively, perfluoropolyether, perfluoroalkylether, or perfluoropolyalkylether may be used.

The above polyethers may be mixed with low-molecular-weight PTFE added in the form of powder of exceedingly small particles, to obtain a consistency suitable for treating only sides 16.

Unlike other types, lubricants containing fluorinated polyethers have been found to have the advantage of not interacting with the polymers of the elastomeric body material, so that lubrication performance remains unchanged, even after prolonged use of the belt.

The method of producing the toothed belt according to the present invention comprises known steps not described in detail, and also a step of treating the sides only of the toothed belt with lubricant 18, which may be sprayed on, or applied by rollers impregnated with lubricant, or spread on.

The advantages of toothed belt 11 according to the present invention will be clear from the foregoing description.

In actual use, toothed belt 11 with treated sides 16 manifests no stick-slip effect, and has a very low noise level at low speed.

The lubricant selected provides for maintaining lubrication characteristics unchanged with time.

Clearly, changes may be made to toothed belt 11 as described herein without, however, departing from the scope of the present invention.

For example, changes may be made to the component materials of lubricant 18 used to treat sides 16.

## Claims

1. A toothed belt (11) comprising a body (12) made of elastomeric material and having two faces (14), two sides (16), and toothing defined by a number of teeth (15) extending integrally from one of said faces (14) of the body; **characterized in that** said sides of said toothed belt are treated with friction variation means (18) .

2. A toothed belt as claimed in Claim 1, **characterized in that** said friction variation means (18) comprise a lubricant (18) which does not interact with the polymers of the elastomeric material of the body (12) .

3. A toothed belt as claimed in Claim 2, **characterized in that** said lubricant (18) comprises halogenated polyethers.

4. A toothed belt as claimed in Claim 3, **characterized in that** said halogenated polyethers comprise fluorinated polyethers.

5. A toothed belt as claimed in Claim 4, **characterized in that** said fluorinated polyethers comprise perfluoropolyethers.

6. A toothed belt as claimed in any one of the foregoing Claims, **characterized in that** said lubricant is semisolid.

7. A vehicle timing control system (1) comprising a tensioning device (4) having at least one annular retaining flange (5, 6); and a toothed belt (11) in turn comprising a body (12) made of elastomeric material and having two faces (14), two sides (16), and toothing defined by a number of teeth (15) extending integrally from one of said faces (14) of the body; **characterized in that** said sides of said toothed belt are treated with friction variation means (18).

8. A system as claimed in Claim 7, **characterized in that** said friction variation means (18) comprise a lubricant (18) which does not interact with the polymers of the elastomeric material of the body (12).

9. A system as claimed in Claim 8, **characterized in that** said lubricant (18) comprises halogenated polyethers.

10. A system as claimed in Claim 9, **characterized in that** said halogenated polyethers comprise fluorinated polyethers.

11. A system as claimed in Claim 10, **characterized in that** said fluorinated polyethers comprise perfluoropolyethers.

12. A system as claimed in any one of Claims 8 to 11, **characterized in that** said lubricant is semisolid.

13. A method of preparing a toothed belt (11); said toothed belt comprising a body (12) made of elastomeric material and having two faces (14), two sides (16), and toothing defined by a number of teeth (15) extending integrally from one of said faces of the body; **characterized by** comprising the step of treating only said sides (16) with friction variation means (18).
